# EUROPÄISCHE PATENTSCHRIFT

(11) **EP 1 029 752 B1**
(45) Veröffentlichungstag und Bekanntmachung des Hinweises auf die Patenterteilung: **07.04.2004**
(21) Anmeldenummer: 00101354.9
(22) Anmeldetag: 24.01.2000
(51) Int. Cl.: B60R 22/40, B60R 22/42, B60R 22/46

(54) **Sicherheitsgurteinrichtung**
Seat belt assembly
Agencement de ceinture de sécurité

(30) Priorität: 20.02.1999 DE 19907395
(43) Veröffentlichungstag der Anmeldung: 23.08.2000
(73) Patentinhaber: Volkswagen Aktiengesellschaft, 38436 Wolfsburg (DE)
(72) Erfinder: Friedewald, Klaus, Dr., 38104 Braunschweig (DE)

(56) Entgegenhaltungen:
- EP-A- 0 747 272
- DE-A- 4 331 027
- US-A- 3 918 545
- US-A- 5 415 431
- US-A- 5 552 986

## Beschreibung

Die Erfindung betrifft eine Sicherheitsgurteinrichtung gemäß dem Oberbegriff des Patentanspruchs 1.

Wie allgemein bekannt ist, verhindern Sicherheitsgurte in Kraftfahrzeugen, daß sich bei einem Aufprall des Kraftfahrzeugs ein Fahrzeuginsasse infolge seiner Trägheit in Bezug zu dem durch den Aufprall verzögerten Kraftfahrzeug weiterbewegt und mit dem Kopf oder mit dem Oberkörper auf das Lenkrad oder die Instrumententafel aufschlägt, wodurch schwere Verletzungen verursacht werden können. Sicherheitsgurte sind daher fester Bestandteil nahezu jedes Kraftfahrzeugs.

Jedoch hat sich in der Praxis gezeigt, daß Sicherheitsgurte nicht nur unfallbedingte Verletzungen verhindern, sondern auch selbst die Ursache von Verletzungen sein können, wobei es sich allerdings in der Regel nur um leichtere Verletzungen, wie zum Beispiel Quetschungen oder Hautabschürfungen handelt. Diese Verletzungen werden dadurch verursacht, daß ein mit dem Sicherheitsgurt gesicherter Fahrzeuginsasse bei einem Aufprall des Kraftfahrzeugs vom Sicherheitsgurt mit hoher Verzögerung, d.h. auf einem sehr kurzen Bremsweg, abgebremst wird, wodurch vom Sicherheitsgurt große Kräfte auf den Fahrzeuginsassen ausgeübt werden, die zum Auftreten der vorgenannten Verletzungen führen können.

Um die vom Sicherheitsgurt auf den Fahrzeuginsassen ausgeübte Gurtkraft zu begrenzen und damit das Auftreten derartiger Verletzungen zu verhindern, werden Sicherheitsgurte üblicher Sicherheitsgurteinrichtungen bereits seit einiger Zeit serienmäßig mit einem Gurtkraftbegrenzer ausgestattet. Dabei wird in den meisten Fällen im inneren einer hohlen

Aufwickelwelle des Sicherheitsgurtes ein plastisch verformbarer Torsionsstab angebracht, der bei Überschreiten einer vorgegebenen Gurtzugkraft in sich verdreht wird, wodurch der Sicherheitsgurt etwas nachgibt und damit einen weiteren Anstieg der auf den Fahrzeuginsassen einwirkenden Gurtkraft verhindert. Jedoch sind auch andere Gurtkraftbegrenzungseinrichtungen bekannt, bei denen die Gurtkraft zum Beispiel durch Verformung eines zwischen dem Aufrollmechanismus des Sicherheitsgurtes und der Karrosserie angeordneten Kraftbegrenzungselements erreicht wird.

Durch die Verformung des Torsionsstabs oder eines anderen Kraftbegrenzungselements des Gurtkraftbegrenzers wird jedoch auch der Bremsweg des Fahrzeuginsassen und damit dessen Vorverlagerung in Bezug zum Kraftfahrzeug vergrößert, was insbesondere bei schwereren Unfällen in Kraftfahrzeugen ohne zusätzlichen Airbag wieder dazu führen kann, daß der Kopf oder der Oberkörper des Fahrzeuginsassen auf dem Lenkrad oder auf der Instrumententafel aufschlägt.

Zwar wird die Verlängerung des Bremswegs gewöhnlich durch einen Anschlag- oder Haltemechanismus begrenzt, der zum Beispiel bei dem Gurtkraftbegrenzer mit Torsionsstab verhindert, daß dieser über einen vorbestimmten Drehwinkel hinaus tordiert wird. Bei weit nach vorne geschobenem Fahrzeugsitz oder bei großer Körpergröße des Fahrzeuginsassen kann es jedoch vorkommen, daß dieser Anschlag- oder Haltemechanismus erst dann wirksam wird, wenn es bereits zu einem Aufschlagen des Kopfs oder Oberkörpers des Fahrzeuginsassen auf dem Lenkrad oder der Instrumententafel gekommen ist. Ein in dieser Weise arbeitender, gattungsgemäßer, als Torsionsstab ausgeführter Gurtkraftbegrenzer ist aus der DE 43 31 027 A1 bekannt. Der Gurtkraftbegrenzer ist im Ausgangszustand, d. h. vor einem Unfall, gesperrt und wird hier nach Auslösung des Strammers zugeschaltet, um einen durch einen Haltemechanismus begrenzten Gurtbandauszug zu ermöglichen. Anschließend wird der Gürtkraftbegrenzer wieder wirkungslos gemacht, um eine zu große Vorverlagerung des Insassen zu vermeiden.

Beider aus der US 5 415 431 bekannten Sicherheitsgurteinrichtung ist die Gurtkraftbegrenzung in einem mehrlagigen Gurtband integriert. Ab einer definierten Gurtkraft dehnt sich das Gurtband, um die Gurtkräfte unter Vorverlagerung des Insassen zu reduzieren. Im Crashfall wird das Gurtband nach der Sensierung des Unfalls über eine Strammereinrichtung gestrafft. Bei Erreichen einer festgelegten, maximalen Gurtkraft wird die Strammereinrichtung von der Arretiervorrichtung unterbrochen. Das Gurtband wird zwischen dem Strammer und dem Einwirkungsbereich des Insassen auf das Gurtband festgelegt und die Gurtkraftbegrenzung kann nun durch Dehnung des Gurtbandes im Einwirkungsbereich des Insassen ausgenutzt werden. Somit ist immer, d. h. auch bei schweren Unfällen, eine zusätzliche Vorverlagerung des Insassen durch die Gurtkraftbegrenzung, nämlich durch die Längung des Gurtbandes, gegeben.

Der Erfindung liegt die Aufgabe zugrunde, eine Sicherheitsgurteinrichtung der eingangs genannten Art dahingehend zu verbessern, daß bei leichten Unfällen durch den Sicherheitsgurt hervorgerufene Verletzungen und gleichzeitig bei schweren Unfällen durch Aufschlagen des Kopfs oder des Oberkörpers des Fahrzeuginsassen auf dem Lenkrad oder der Instrumententafel hervorgerufene Verletzungen sicher vermieden werden können.

Diese Aufgabe wird erfindungsgemäß durch den kennzeichnenden Teil des Anspruchs 1 gelöst, vorteilhafte Ausbildungen der Erfindung beschreiben die Unteransprüche.

Die Sicherheitsgurteinrichtung umfasst eine Arretiervorrichtung, die bei Überschreiten einer vorgegebenen Unfallschwere anspricht und zwischen dem Gurtkraftbegrenzer und einem Einwirkungsbereich des Sicherheitsgurtes auf den Fahrzeuginsassen an einem Teil der Sicherheitsgurteinrichtung angreift, um das Nachgeben des Sicherheitsgurtes zu verhindern. Der Einwirkungsbereich ist der Bereich, in dem der Sicherheitsgurt am Fahrzeuginsassen anliegt.

Durch die erfindungsgemäße Merkmalskombination wird dafür gesorgt, daß einerseits bei leichteren Unfällen, wie beispielsweise Auffahrunfällen mit geringer Geschwindigkeit, der Sicherheitsgurt etwas nachgibt, wenn die vom Sicherheitsgurt auf den Fahrzeuginsassen ausgeübte Gurtkraft bzw. die Gurtzugkraft einen vorgegebenen Wert übersteigt, um Quetschungen und Hautabschürfungen im Einwirkungsbereich des Sicherheitsgurts zu vermeiden, wie dies auch bei herkömmlichen Rückhaltesystemen mit Gurtkraftbegrenzer der Fall ist, weil in diesem Fall die Arretiervorrichtung nicht anspricht. Andererseits wird jedoch bei schwereren Unfällen, wie beispielsweise bei einem Frontalzusammenstoß mit mittlerer oder hoher Geschwindigkeit und beim Überschlagen des Fahrzeugs, eine durch ein Nachgeben des Sicherheitsgurts verursachte Vorverlagerung des Fahrzeuginsassen verhindert und damit das Risiko von schwereren Verletzungen des Kopfs oder Oberkörpers des Fahrzeuginsassen verringert, wobei in

Die Schwere des Unfalls wird von einem Bordcomputer des Kraftfahrzeugs ermittelt, wobei dieser Bordcomputer vorzugsweise ein sogenannter Airbag-Computer ist, der auch zur Aktivierung anderer Elemente des Rückhaltesystems, wie beispielsweise von Airbags oder Gurtstraffern verwendet wird. Zur Ermittlung der Unfallschwere werden vorzugsweise Aufprallparameter gemessen, wie beispielsweise die Höhe der Verzögerung des Fahrzeugs beim Aufprall mittels eines oder mehrerer Beschleunigungssensoren, die Zeitdauer, während der ein hoher Beschleunigungswert überschritten wird, sowie ggf. Kippbewegungen des Fahrzeugs mittels eines oder mehrerer Neigungssensoren, wie zum Beispiel die bei einem Überschlag oder einem seitlichen Überrollen des Fahrzeugs auftretenden Überschreitungen eines vorgegebenen maximalen Neigungswinkels. Die Zeitdauer der Verzögerung bzw. das Überschreiten einer vorgegebenen Zeitdauer bei anhaltender hoher Bremsverzögerung ist wesentlich für die Ermittlung der Unfallschwere, da die Verzögerungswerte bei einem Aufprall in der Regel nicht mehr wesentlich ansteigen, wenn es nach einer anfänglichen Deformation von Stoßfänger und Verkleidung zu einer Deformation der tragenden Vorderwagenstruktur des Fahrzeugs kommt.

Die genannten oder andere bzw. weitere Aufprallparameter fließen in einen zur Berechnung der Unfallschwere dienenden Algorithmus ein, der bei Überschreiten eines vorgegebenen Grenzwerts eine Auslösung der Arretiervorrichtung zur Folge hat. Neben den Aufprallparametern können auch Fahrparameter in den Algorithmus einfließen, wie die Geschwindigkeit des Fahrzeugs unmittelbar vor dem Aufprall, die zum Beispiel am Tachometer abgegriffen und jeweils in Abständen von etwa einer Sekunde oder weniger in einem Speicher des Computers gespeichert wird, wo der zuletzt gespeicherte Wert abgerufen wird, wenn bei einem Aufprall ein vorgegebener Verzögerungswert überschritten wird, bzw. wenn die Überschreitung länger als ein vorgegebener Zeitraum andauert.

Eine erste alternative Ausgestaltung der Erfindung sieht vor, daß die Arretiervorrichtung am Sicherheitsgurt angreift, wobei sie bevorzugt einen Stellantrieb und ein bei Aktivierung der Arretiervorrichtung vom Stellantrieb in Richtung des Sicherheitsgurtes bewegtes Klemmelement umfaßt, das den Sicherheitsgurt durch Anpressen desselben gegen ein Widerlager arretiert. Der Stellantrieb kann zum Beispiel einen Federspeicherzylinder, einen pyrotechnischen Treibsatz, einen elektrischen Antriebsmotor oder einen unter Druck stehenden Fluidspeicher umfassen, der bei einer Aktivierung schnell anspricht. Eine derartige Ausgestaltung der Arretiervorrichtung hat den Vorteil, daß sie ungeachtet der konstruktiven Ausgestaltung der Gurtkraftbegrenzer bei jedem Sicherheitsgurt einsetzbar ist.

Eine zweite alternative Ausgestaltung der Erfindung, die insbesondere bei Sicherheitsgurteinrichtungen einsetzbar ist, bei denen der Gurtkraftbegrenzer von einem Torsionsstab im Inneren einer hohlen Aufwickelwelle des Sicherheitsgurtes gebildet wird, sieht demgegenüber vor, daß die Arretiervorrichtung an der Aufwickelwelle angreift und deren Drehung und damit auch die Torsion des Torsionsstabs verhindert. In diesem Fall umfaßt die Arretiervorrichtung bevorzugt ein Arretierelement, das von einem Stellantrieb, wie beispielsweise einer Magnetspule in eine Position bewegt wird, in der es die Aufwickelwelle blockiert, wenn die Arretiervorrichtung bei einer Überschreitung der vorgegebenen Unfallschwere vom Bordcomputer aktiviert wird. Bei einer derartigen Ausgestaltung können der konstruktive Aufwand für die Arretiervorrichtung und die zur Arretierung erforderlichen Kräfte verringert werden.

Die Arretiervorrichtung kann alternativ auch an einem Gurtschloß des Sicherheitsgurtes angreifen, wenn der Gurtkraftbegrenzer im Bereich des Gurtschlosses angeordnet ist.

Die Sicherheitsgurteinrichtung kann auch einen Gurtstraffer für den Sicherheitsgurt umfassen, wobei in diesem Fall bei einem Aufprall der Bordcomputer zuerst den Gurtstraffer und dann im Anschluß an das Straffen des Sicherheitsgurtes die Arretiervorrichtung aktiviert.

Im folgenden wird die Erfindung anhand zweier in der Zeichnung dargestellter Ausführungsbeispiele näher erläutert. Es zeigen:
Fig. 1: eine Seitenansicht von wesentlichen Teilen einer Sicherheitsgurteinrichtung mit einer ersten erfindungsgemäßen Arretiervorrichtung;
Fig. 2: eine teilweise weggeschnittene auseinandergezogene perspektivische Ansicht von wesentlichen Teilen der Sicherheitsgurteinrichtung jedoch mit einer anderen erfindungsgemäßen Arretiervorrichtung.

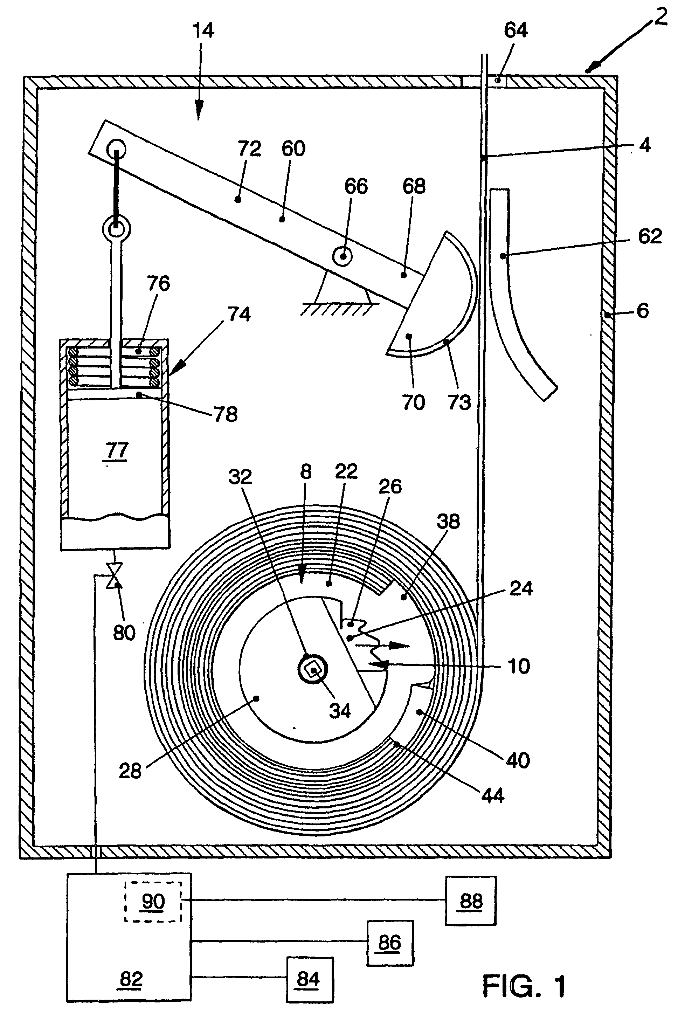

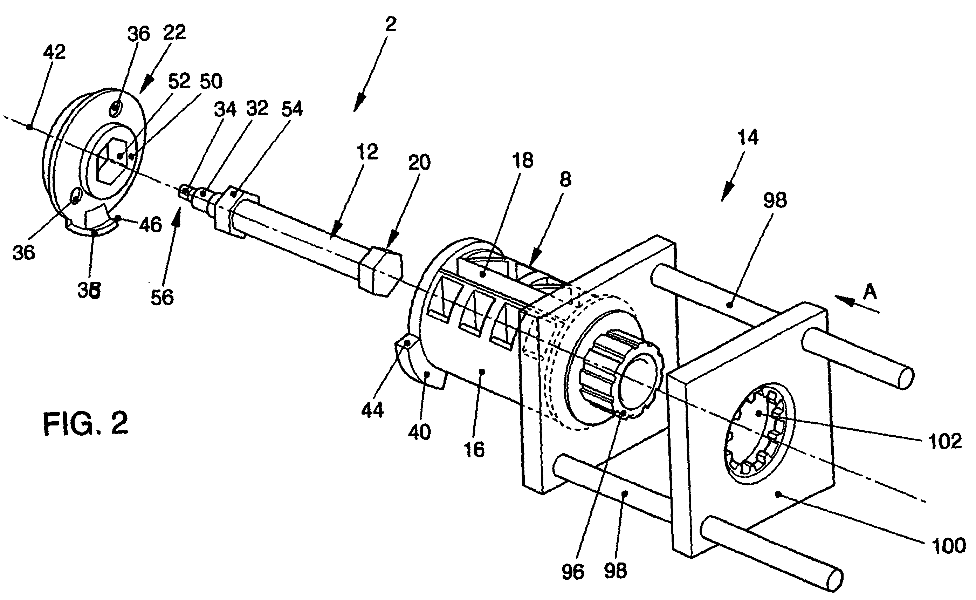

Die in der Zeichnung nur teilweise dargestellte Sicherheitsgurteinrichtung 2 für einen Pkw besteht im wesentlichen aus einem Sicherheitsgurt 4 (Fig. 1), dessen eines Ende innerhalb einer ortsfesten Gurtkassette 6 (Fig. 1) auf eine drehbaren Aufwickelwelle 8 aufgewickelt ist und sich zum Gebrauch entgegen der Kraft einer Rückstellfeder eines herkömmlichen Gurtaufrollmechanismus von der Aufwickelwelle 8 abziehen läßt, einem Blockiermechanismus 10 (in Fig. 1 teilweise dargestellt), der bei einer ruckartigen Belastung des Sicherheitsgurtes 4 die Aufwickelwelle 8 blockiert, um ein weiteres Abziehen des Sicherheitsgurtes 4 zu verhindern, sowie einem Torsionsstab 12 (Fig. 2), der innerhalb der hohlen Aufwickelwelle 8 angeordnet ist und sich bei Überschreiten einer vorgegebenen Zugkraft im Gurt 4 unter Torsion plastisch verformt, um die vom Gurt 4 auf einen Fahrzeuginsassen ausgeübte Gurtkraft zu begrenzen.

Wie am besten in Fig. 2 dargestellt, wird die Aufwickelwelle 8 von einer Hohlwelle aus Leichtmetallguß gebildet, deren Wand 16 zwei in Längsrichtung verlaufende Schlitze 18 (nur einer sichtbar) aufweist, die in bekannter Weise zur Befestigung des schtaufenförmigen Endes des Sicherheitsgurtes 4 an der Aufwickelwelle 8 dienen.

Die Aufwickelwelle 8 weist an einem ihrer beiden Stirnenden (in Fig. 2 rechts) eine im Querschnitt sechseckige Öffnung (nicht sichtbar) auf, in die ein im Querschnitt sechseckiges Stirnende 20 des Torsionsstabs 12 eingreift, wobei der Querschnitt des Stirnendes 20 an den Querschnitt der Öffnung angepaßt ist, so daß die Aufwickelwelle 8 nach dem formschlüssigen Einführen des Stirnendes 20 in die Öffnung drehfest mit diesem Ende des Torsionsstabs 12 im Eingriff steht.

Der im wesentlichen zylindrische Torsionsstab 12 besteht aus einem plastisch verformbaren Material, dessen Eigenschaften so an die Querschnittsabmessungen des Torsionsstabs 12 angepaßt werden, daß sich der Torsionsstab 12 bei einer einseitigen Einspannung im Bereich des Abschnitts 54 durch Torsion plastisch verformt, wenn am entgegengesetzten Stirnende 20 ein bestimmtes Drehmoment um seine Längsachse 42 überschritten wird. Dieses Drehmoment wird gewöhnlich so gewählt, daß sich der im Kraftübertragungspfad zwischen der Aufwickelwelle 8 und dem Blockiermechanismus 10 angeordnete Torsionsstab 12 in sich verdreht, bevor die vom Sicherheitsgurt 4 auf einen Fahrzeuginsassen ausgeübte Gurtkraft einen Wert übersteigt, der zu Verletzungen des Fahrzeuginsassen, wie beispielsweise Quetschungen oder Hautabschürfungen, führen kann.

Das andere Stirnende der Aufwickelwelle 8 ist drehfest mit einem Profilkopf 22 des Blockiermechanismus 10 verbunden, der sich beim langsamen Auf- oder Abwickeln des Gurtes 4 in einer gezahnten Ausstanzung einer ortsfest in der Gurtkassette 6 montierten Lagerplatte (nicht dargestellt) dreht und auf seiner von der Aufwickelwelle 8 abgewandten Stirnseite (Fig. 1) eine radial verschiebbar gelagerte Zahnscheibe 24 mit mehreren Zähnen 26 aufweist, die bei einer ruckartigen Belastung des Gurtes 4 zwischen die jeweils benachbarten Zähne der gezahnten Ausstanzung einsteuem und die Aufwickelwelle 8 bis zur nachfolgenden Entlastung des Gurtes 4 gegen ein weiteres Verdrehen blockieren. Die Zahnscheibe 24 ist unter einer stirnseitigen Abdeckplatte 28 des Profilkopfs 22 entgegen der Kraft einer Feder (nicht dargestellt) aus ihrer in Fig. 1 dargestellten Ruheposition in Richtung des Pfeils nach außen verschiebbar, so daß sich ihre Zähne 26 nach dem Einsteuern infolge der Relativbewegung zwischen der Zahnscheibe 24 und der Lagerplatte ganz in die Lücken zwischen den Zähnen der Ausstanzung bewegen.

Weiter nimmt der Profilkopf 22 auf dieser Seite einen durch eine Bohrung 30 in der Abdeckplatte 28 axial überstehenden Wellenstumpf 32 auf, der in einer Lagerbuchse des Gehäuses 6 drehbar gelagert ist. Der Wellenstumpf 32 ist an seinem Stirnende mit einem Vierkantzapfen 34 versehen, der in eine entsprechende Vierkanthülse (nicht dargestellt) am inneren Ende der Rückstellfeder des Gurtaufrollmechanismus eingreift.

Die drehfeste Verbindung zwischen dem Stirnende der Aufwickelwelle 8 und dem Profilkopf 22 wird durch zwei in axialer Richtung über eine ebene Stirnfläche der Aufwickelwelle 8 überstehende Scherbolzen (nicht sichtbar) hergestellt, die in entsprechenden Bohrungen 36 des Profilkopfs 22 verstemmt sind und abgeschert werden, wenn nach einem Blockieren des Profilkopfs 22 in der Ausstanzung der Lagerplatte infolge der Gurtzugkraft eine durch den Durchmesser und die Scherfestigkeit des Materials der Scherbolzen vorgegebene Drehmomentgrenze in der Aufwickelwelle 8 überschritten wird.

Sowohl der Profilkopf 22 und das benachbarte Stirnende der Aufwickelwelle 8 weisen in radialer Richtung überstehende Fortsätze 38, 40 auf, die jeweils in der Ebene einer Drehachse 42 der Aufwickelwelle 8 mit einer radial ausgerichteten Anschlagfläche 44, 46 versehen sind, wobei sich diese Anschlagflächen 44, 46 in Drehrichtung der Aufwickelwelle 8 beim Abwickeln des Gurtes 4 in einem Winkelabstand von etwa 270 Grad gegenüberliegen.

Auf seiner der Aufwickelwelle 8 zugewandten Stirnseite weist der Profilkopf 22 einen flachen axial überstehenden zylindrischen Vorsprung 50 mit einer im Querschnitt sechseckigen mittigen Aussparung 52 auf, in die ein an den Wellenstumpf 32 anschließender im Querschnitt entsprechend sechseckiger Abschnitt 54 in der Nähe des Stimendes 56 des Torsionsstabs 12 formschlüssig eingreift, um diesen Abschnitt 54 drehfest mit dem Profilkopf 22 des Blockiermechanismus 8 zu verbinden. Zwischen dem sechseckigen Abschnitt 54 und dem sechseckigen Stirnende 20 weist der Torsionsstab 12 einen kreisförmigen Querschnitt auf, so daß sich die Aufwickelwelle 8 dort frei gegenüber dem Torsionsstab 12 verdrehen kann, wenn bei Überschreiten eines vorgegebenen Schwellenwertes der Gurtzugkraft zuerst die beiden Scherbolzen abgeschert werden und dann bei anhaltender oder steigender Gurtzugkraft der nunmehr im Kraftübertragungspfad zwischen der Aufwickelwelle 8 und dem Profilkopf 22 angeordnete und durch den Profilkopf 22 einseitig blockierte Torsionsstab 12 infolge der Kraftübertragung vom Gurt 4 auf die Aufwickelwelle 8 in sich verdreht wird.

Infolge der drehfesten Verbindung zwischen der Aufwickelwelle 8 und dem Torsionsstab 12 an dessen formschlüssig mit dem einen Stirnende der Aufwickelwelle verbundenen Stirnende 20 sowie infolge der Blockierung des Abschnitts 54 durch den Profilkopf 22 dreht sich die Aufwickelwelle 8 nach einem Abscheren der Scherbolzen bei einer belastungsbedingten Torsion des Torsionsstab 12 mit dessen Stirnende 20 mit, bis die Anschlagflächen 44, 46 gegeneinander anschlagen und eine weitere Drehung der Aufwickelwelle 8 verhindern. Während der Drehung der Aufwickelwelle 8 wickelt sich der Gurt 4 etwas von dieser ab, wobei das dadurch verursachte Nachgeben des Gurtes 4 einen weiteren Anstieg der Gurtkraft verhindert. Durch die Anschlagflächen 44, 46 auf der Aufwickelwelle 8 bzw. auf dem blockierten Profilkopf 22 wird zwar das Nachgeben des Gurtes 4 und damit die Vorverlagerung des Fahrzeuginsassen begrenzt, jedoch kann ein Aufschlagen des Kopfs oder Oberkörpers des Fahrzeuginsassen auf das Lenkrad oder auf die Instrumententafel des Pkw insbesondere dann nicht immer sicher verhindert werden, wenn in der Ausgangsposition, d.h. vor dem Aufprall, der Abstand des Kopfs oder Oberkörpers des Fahrzeuginsassen vom Lenkrad bzw. von der Instrumententafel infolge einer großen Körpergröße oder eines weit nach vorne geschobenen Sitzes kleiner als üblich ist.

Um nun jedoch einerseits Verletzungen infolge einer derartigen Vorverlagerung des Fahrzeuginsassen bei schwereren Unfällen zu verhindern, und um andererseits zugleich sicherzustellen, daß die Gurtkraftbegrenzung bei leichteren Unfällen voll zur Wirkung kommt, um Verletzungen durch den Sicherheitsgurt 4 zu verhindern, sind die in Fig. 1 und 2 dargestellten Sicherheitsgurteinrichtungen 2 neben den bisher beschriebenen üblicherweise vorhandenen Komponenten jeweils mit einer Arretiervorrichtung 14 versehen, die bei schwereren Unfällen aktiviert wird und ein Nachgeben des Sicherheitsgurtes 4 infolge einer Verformung des Torsionsstabs 12 verhindert, während sie bei leichteren Unfällen nicht aktiviert wird, so daß die Gurtkraft durch das Nachgeben des Gurtes 4 begrenzt wird.

Bei dem in Fig. 1 dargestellten Ausführungsbeispiel umfaßt die Arretiervorrichtung 14 einen innerhalb der Gurtkassette 6 angeordneten Klemmhebel 60, der dazu dient, bei einer Aktivierung der Arretiervorrichtung 14 den Sicherheitsgurt 4 gegen ein innerhalb der Gurtkassette 6 angeordnetes ortsfestes Widerlager 62 anzupressen, um den Sicherheitsgurt 4 zwischen der Aufwickelwelle 8 und einer Gurtaustrittsöffnung 64 der Kassette 6, d.h. hinter dem Torsionsstab 12 und vor dem Einwirkbereich des Sicherheitsgurtes 4 auf den Fahrzeuginsassen zu arretieren, so daß er nicht mehr nachgeben kann. Der Klemmhebel 60 ist als zweiarmiger Hebel ausgebildet, der um eine zur Drehachse 42 der Aufwickelwelle 8 parallele Drehachse 66 verschwenkbar ist. Der kürzere Hebelarm 68 des Klemmhebels 60 trägt einen Klemmkörper 70, der beim Verschwenken des Hebels 60 auf den Sicherheitsgurt 4 einwirkt, während der längere Hebelarm 72 mit einem als Stellantrieb dienenden Federspeicherzylinder 74 verbunden ist. Die Richtung der Schwenkbewegung des Klemmhebels 60 bei der Aktivierung der Arretiervorrichtung ist so gewählt, daß sich der Klemmkörper 70 bei der Annäherung an den Sicherheitsgurt 4 in Richtung der Gurtzugkraft bewegt, so daß der Sicherheitsgurt 4 nicht nur durch das vom Federspeicherzylinder 74 auf den Hebel 60 ausgeübte Drehmoment festgeklemmt wird, sondern daß auch die Gurtzugkraft infolge der Reibung des Gurtes 4 am Klemmkörper 70 für eine zusätzliche, in Schwenkrichtung auf den Klemmkörper 70 einwirkende Kraft sorgt, welche die Klemmkraft vergrößert. Um die Reibung zwischen dem Gurt 4 und dem Klemmkörper 70 möglichst groß zu machen, kann der Klemmkörper 70 auf seiner dem Gurt 4 zugewandten konvexen Seite mit einem Belag 73 aus einem gummielastischen Material versehen sein, so daß die Materialpaarung Belag/Gurt einen hohen Reibungskoeffizienten aufweist.

Der Federspeicherzylinder 74 enthält eine vorgespannte Schraubenfeder 76, die auf der dem Hebel 60 zugewandten Seite eines Kolbens 78 des Federspeicherzylinders 74 angeordnet ist, während der Federspeicherzylinder 74 auf der vom Hebel 60 abgewandten Seite des Kolbens 78 mit Druckluft gefüllt ist, um den Kolben 78 entgegen der Kraft der Feder 76 durch Druckluft in seiner in Fig. 1 dargestellten Ausgangsposition zu halten. Alternativ kann an Stelle der Schraubenfeder 76 ein Tellerfederpaket vorgesehen sein. Der mit Druckluft gefüllte Teil 77 des Federspeicherzylinders 74 ist mit der Umgebung über ein Ablassventil 80 verbunden, dessen Betätigung durch einen Bord- oder Airbag-Computer 82 des Pkw gesteuert wird.

Der Computer 82, der auch zur Aktivierung weiterer Komponenten eines Insassenrückhaltesystems des Pkw dienen kann, ist mit einem Beschleunigungssensor 84 verbunden, der die Bremsbeschleunigung des Pkw bei der Fahrt und bei einem Aufprall misst und an den Computer 82 übermittelt. Weiter ist der Computer 82 mit einem Neigungssensor 86 verbunden, der eine Überschreitung eines vorgegebenen Kippwinkels des Pkw an den Computer 82 meldet. Außerdem ist der Computer 82 mit dem Tachometer 88 verbunden, der die Fahrtgeschwindigkeit des Pkw kontinuierlich misst und an den Computer 82 übermittelt, wo in Sekundenabständen die zuletzt gemessene Fahrtgeschwindigkeit in einem Speicher 90 gespeichert wird.

Wenn die Bremsbeschleunigung des Pkw einen vorgegebenen Wert übersteigt und diese hohe Bremsbeschleunigung gleichzeitig länger als ein vorbestimmter Zeitraum anhält, und wenn ggf. eine Abfrage des Speichers 90 zudem eine hohe Fahrtgeschwindigkeit ergibt, oder wenn ein vorbestimmter Kippwinkel überschritten wird, der einen Überschlag oder ein seitliches Überrollen des Pkw anzeigt, erkennt der Computer 82, daß ein Unfall vorliegt, der eine vorgegebene Unfallschwere überschreitet, und öffnet das Ablassventil 80. Dadurch strömt die Druckluft aus dem Federspeicherzylinder 74 aus, der Hebel 60 wird durch die Federkraft der vorgespannten Schraubenfeder 76 verschwenkt und der Klemmkörper 70 drückt den Gurt 4 gegen das Widerlager 62, wodurch er arretiert wird. Durch die Arretierung des Gurtes 4 wird gleichzeitig der Torsionsstab 12 entlastet, so daß er sich nicht oder nicht weiter verdreht. Die Begrenzung der Gurtkraft durch das Nachgeben des Sicherheitsgurtes 4 infolge der Torsion des Torsionsstabs 12 wird somit durch die Aktivierung der Arretiervorrichtung 14 bei schwereren Unfällen verhindert. Demgegenüber wird die Arretiervorrichtung 14 bei leichteren Unfällen nicht aktiviert, so daß die Gurtkraftbegrenzung durch die Torsion des Torsionsstabs 12 voll zur Wirkung kommt.

Im Unterschied zu dem Ausführungsbeispiel aus Fig. 1 arretiert die Arretiervorrichtung 14 bei dem in Fig. 2 dargestellten Ausführungsbeispiel nicht den Sicherheitsgurt 4, sondern die Aufwickelwelle 8. Dazu ist diese an ihrem vom Profilkopf 22 abgewandten Stimende in einer Lageröffnung einer Montageplatte drehbar gelagert, wobei sie drehfest mit einem durch die Lageröffnung hindurch nach außen überstehenden Ritzel 96 verbunden ist. Die Montageplatte wird von zwei nach außen überstehenden parallelen Rundstangen 98 gehalten, welche gleichzeitig als Führungsschienen für eine zur Montageplatte parallele Arretierplatte 100 dienen, die mittels einer als Stellantrieb dienenden Magnetspule (nicht dargestellt) in axialer Richtung der Aufwickelwelle 8 (Pfeil A) auf diese zu verschiebbar ist.

Die Arretierplatte 100 weist eine mittige Aufnahmeöffnung 102 für das Ritzel 96 auf, deren Rand mit einer Innenverzahnung versehen ist, die mit der Außenverzahnung des Ritzels 96 in Eingriff tritt und die Aufwickelwelle 8 blockiert, wenn die Arretierplatte 100 bei Aktivierung der Arretiervorrichtung 14 so weit in Richtung der Aufwickelwelle 8 verschoben wird, daß das Ritzel 12 die Aufnahmeöffnung 102 durchsetzt. Um den gegenseitigen Eingriff der Verzahnungen zu erleichtern, weisen die Zähne vorzugsweise geringere Breiten als die Zahnzwischenräume auf und sind an ihren einander zugewandten Seiten verjüngt (nicht dargestellt).

Die Blockierung der Aufwickelwelle 8 durch die Arretierplatte 100 hat im wesentlichen dieselbe Wirkung wie die zuvor beschriebene Blockierung des Gurtes 4 durch den Klemmkörper 70 und kann beispielsweise auch durch einen Keil erreicht werden, der von einem Stellantrieb zwischen eine mit Vorsprüngen versehene Umfangsfläche eines Flanschs der Aufwickelwelle und ein im Abstand angeordnetes Widerlager bewegt wird.

## Patentansprüche

1. Sicherheitsgurteinrichtung (2) mit einem Sicherheitsgurt (4), einer Arretiervorrichtung (14) und einem Gurtkraftbegrenzer (12) der bei Überschreiten einer vorgegebenen Zugkraft im Sicherheitsgurt (4) dafür sorgt, daß der Sicherheitsgurt (4) etwas nachgibt, um dadurch eine vom Sicherheitsgurt (4) auf einen Fahrzeuginsassen ausgeübte Gurtkraft zu begrenzen wobei die Arretiervorrichtung (14) bei Überschreiten einer vorgegebenen Unfallschwere anspricht und zwischen dem Gurtkraftbegrenzer (12) und einem Einwirkungsbereich des Sicherheitsgurts (4) auf den Fahrzeuginsassen an einem Teil (4, 8) der Sicherheitsgurteinrichtung (2) angreift, um das Nachgeben des Sicherheitsgurtes (4) bei Überschreiten der vorgegebenen Unfallschwere zu verhindern, **dadurch gekennzeichnet, dass** die Arretiervorrichtung (14) von einem von zumindest einem Sensor (84, 86) gespeisten Computer (82) zur Ermittlung der Unfallschwerel direkt angesteuert wird.

2. Sicherheitsgurteinrichtung nach Anspruch 1, **dadurch gekennzeichnet, daß** die Arretiervorrichtung (14) am Sicherheitsgurt (4) angreift.

3. Sicherheitsgurteinrichtung nach Anspruch 1 oder 2, **dadurch gekennzeichnet, daß** die Arretiervorrichtung (14) innerhalb einer Gurtkassette (6) angeordnet ist, die eine Aufwickelwelle (8) für den Sicherheitsgurt (4) umschließt, und zwischen der Aufwickelwelle (8) und einer Gurtaustrittsöffnung (64) der Gurtkassette (6) am Sicherheitsgurt (4) angreift.

4. Sicherheitsgurteinrichtung nach einem der Ansprüche 1 bis 3, **dadurch gekennzeichnet, daß** die Arretiervorrichtung (14) ein Klemmelement (70) aufweist, das den Sicherheitsgurt (4) beim Ansprechen der Arretiervorrichtung (14) durch Anpressen gegen ein Widerlager (62) arretiert.

5. Sicherheitsgurteinrichtung nach Anspruch 4, **dadurch gekennzeichnet, daß** die Arretiervorrichtung (14) einen auf das Klemmelement (70) einwirkenden Stellantrieb (74) umfaßt.

6. Sicherheitsgurteinrichtung nach Anspruch 5, **dadurch gekennzeichnet, daß** der Stellantrieb (74) eine vorgespannte Feder (76), einen pyrotechnischen Treibsatz, einen elektrischen Antriebsmotor oder einen unter Druck stehenden Fluidspeicher umfaßt.

7. Sicherheitsgurteinrichtung nach einem der Ansprüche 4 bis 6, **dadurch gekennzeichnet, daß** der vom Klemmelement (70) gegen das Widerlager (62) angepresste Sicherheitsgurt (4) eine Reibkraft auf das Klemmelement (70) ausübt, die eine Vergrößerung der Anpresskraft verursacht.

8. Sicherheitsgurteinrichtung nach Anspruch 1, **dadurch gekennzeichnet, daß** die Arretiervorrichtung (14) an einer Aufwickelwelle (8) des Sicherheitsgurtes (4) angreift.

9. Sicherheitsgurteinrichtung nach Anspruch 8, **dadurch gekennzeichnet, daß** die Arretiervorrichtung (14) eine Drehung der Aufwickelwelle (8) blockiert.

10. Sicherheitsgurteinrichtung nach einem der Ansprüche 1 bis 9, **dadurch gekennzeichnet, daß** der Gurtkraftbegrenzer einen Torsionsstab (12) umfaßt, der innerhalb einer hohlen Aufwickelwelle (8) für den Sicherheitsgurt (4) angeordnet ist.

11. Sicherheitsgurteinrichtung nach einem der Ansprüche 1 bis 10, **dadurch gekennzeichnet, daß** der Computer (82) die Unfallschwere aus Meßdaten des Fahrzeugs berechnet.

12. Sicherheitsgurteinrichtung nach Anspruch 11, **dadurch gekennzeichnet, daß** die Unfallschwere aus einem oder mehreren der folgenden Meßwerte berechnet wird: Bremsbeschleunigung des Fahrzeugs beim Unfall, Dauer der Bremsbeschleunigung, Geschwindigkeit des Fahrzeugs vor dem Unfall und Kippwinkel.

13. Kraftfahrzeug mit einer Sicherheitsgurteinrichtung nach einem der vorangehenden Ansprüche.

## Claims

1. Seat belt device (2) having a seat belt (4), a locking device (14) and a belt-force limiter (12) which, when a predetermined tensile force in the seat belt (4) is exceeded, ensures that the seat belt (4) gives way to a certain extent in order thereby to limit a belt force which is exerted on a vehicle occupant by the seat belt (4), the locking device (14) responding when a predetermined accident severity is exceeded and, between the belt-force limiter (12) and a region of action of the seat belt (4) on the vehicle occupant, acting on a part (4, 8) of the seat belt device (2) in order to prevent the seat belt (4) from giving way when a predetermined accident severity is exceeded, **characterized in that** the locking device (14) is directly activated by a computer (82) which is fed by at least one sensor (84, 86) and is intended for determining the accident severity.

2. Seat belt device according to Claim 1, **characterized in that** the locking device (14) acts on the seat belt (4).

3. Seat belt device according to Claim 1 or 2, **characterized in that** the locking device (14) is arranged within a belt cassette (16) which surrounds a coiling shaft (8) for the seat belt (4), and acts on the seat belt (4) between the coiling shaft (8) and a belt outlet opening (64) of the belt cassette (6).

4. Seat belt device according to one of Claims 1 to 3, **characterized in that** the locking device (14) has a clamping element (70) which locks the seat belt (4) against an abutment (62), by pressing it against it, when the locking device (14) responds.

5. Seat belt device according to Claim 4, **characterized in that** the locking device (14) comprises an actuator (74) which acts on the clamping element (70).

6. Seat belt device according to Claim 5, **characterized in that** the actuator (74) comprises a prestressed spring (76), a pyrotechnic propellant, an electric driving motor or a pressurized fluid store.

7. Seat belt device according to one of Claims 4 to 6, **characterized in that** the seat belt (4), which is pressed against the abutment (62) by the clamping element (70), exerts a frictional force on the clamping element (70) causing an increase in the pressing force.

8. Seat belt device according to Claim 1, **characterized in that** the locking device (14) acts on a coiling shaft (8) of the seat belt (4).

9. Seat belt device according to Claim 8, **characterized in that** the locking device (14) locks a rotation of the coiling shaft (8).

10. Seat belt device according to one of Claims 1 to 9, **characterized in that** the belt-force limiter comprises a torsion bar (12) which is arranged within a hollow coiling shaft (8) for the seat belt (4).

11. Seat belt device according to one of Claims 1 to 10, **characterized in that** the computer (82) calculates the accident severity from measured data from the vehicle.

12. Seat belt device according to Claim 11, **characterized in that** the accident severity is calculated from one or more of the following measured values: acceleration under braking of the vehicle in the accident, duration of the acceleration under braking, speed of the vehicle before the accident and tilting angle.

13. Motor vehicle with a seat belt device according to one of the preceding claims.

## Revendications

1. Agencement de ceinture de sécurité (2) avec une ceinture de sécurité (4), un dispositif d'arrêt (14) et un limiteur de force de la ceinture (12) lequel, en cas de dépassement d'une force de traction déterminée pour la ceinture de sécurité (4), veille à ce que la ceinture de sécurité (4) se relâche un peu afin de limiter de la sorte une force de ceinture exercée par la ceinture de sécurité (4) sur un passager du véhicule, moyennant quoi le dispositif d'arrêt (14) se déclenche lors du dépassement d'une gravité d'accident prédéterminée et agit sur une partie (4, 8) de l'agencement de ceinture de sécurité (2) entre le limiteur de force de la ceinture (12) et une zone d'influence de la ceinture de sécurité (4) sur le passager du véhicule, afin d'empêcher le relâchement de la ceinture de sécurité (4) en cas de dépassement de la gravité d'accident prédéterminée,
**caractérisé en ce que**
le dispositif d'arrêt (14) est directement déclenché par au moins un ordinateur (82) alimenté par un détecteur (84, 86) pour la détermination de la gravité d'accident.

2. Agencement de ceinture de sécurité selon la revendication 1, **caractérisé en ce que** le dispositif d'arrêt (14) agit sur la ceinture de sécurité (4).

3. Agencement de ceinture de sécurité selon la revendication 1 ou 2, **caractérisé en ce que** le dispositif d'arrêt (14) est disposé à l'intérieur d'une cassette de ceinture (6) enfermant un arbre d'enroulement (8) pour la ceinture de sécurité (4), et qu'il agit sur la ceinture de sécurité (4) entre l'arbre d'enroulement (8) et une ouverture de sortie de ceinture (64) de la cassette de ceinture (6).

4. Agencement de ceinture de sécurité selon l'une quelconque des revendications 1 à 3, **caractérisé en ce que** le dispositif d'arrêt (14) présente un élément de serrage (70) qui arrête la ceinture de sécurité (4) lors du déclenchement du dispositif d'arrêt (14) en pressant contre une butée (62).

5. Agencement de ceinture de sécurité selon la revendication 4, **caractérisé en ce que** le dispositif d'arrêt (14) comprend un mécanisme de commande (74) agissant sur l'élément de serrage (70).

6. Agencement de ceinture de sécurité selon la revendication 5, **caractérisé en ce que** le mécanisme de commande (74) comprend un ressort précontraint (76), un bloc de poudre pyrotechnique, un moteur de commande électrique ou un réservoir à fluide sous pression.

7. Agencement de ceinture de sécurité selon l'une quelconque des revendications 4 à 6, **caractérisé en ce que** la ceinture de sécurité (4) pressée par l'élément de serrage (70) contre la butée (62) exerce une force de friction sur l'élément de serrage (70), laquelle occasionne une augmentation de la force de pression.

8. Agencement de ceinture de sécurité selon la revendication 1, **caractérisé en ce que** le dispositif d'arrêt (14) agit sur un arbre d'enroulement (8) de la ceinture de sécurité (4).

9. Agencement de ceinture de sécurité selon la revendication 8, **caractérisé en ce que** le dispositif d'arrêt (14) bloque une rotation de l'arbre d'enroulement (8).

10. Agencement de ceinture de sécurité selon l'une quelconque des revendications 1 à 9, **caractérisé en ce que** le limiteur de force de la ceinture comprend une barre de torsion (12) disposée à l'intérieur d'un arbre d'enroulement (8) creux pour la ceinture de sécurité (4).

11. Agencement de ceinture de sécurité selon l'une quelconque des revendications 1 à 10, **caractérisé en ce que** l'ordinateur (82) calcule la gravité de l'accident à partir de données de mesure du véhicle.

12. Agencement de ceinture de sécurité selon la revendication 11, **caractérisé en ce que** la gravité de l'accident est calculée à partir d'une ou plusieurs des données de mesure suivantes : accélération de freinage du véhicule en cas d'accident, durée de l'accélération de freinage, vitesse du véhicule avant l'accident et angle d'inclinaison.

13. Véhicule automobile avec un agencement de ceinture de sécurité selon l'une quelconque des revendications précédentes.
